# EUROPÄISCHE PATENTANMELDUNG

(11) **EP 1 085 673 A1**
(43) Veröffentlichungstag der Anmeldung: **21.03.2001**
(21) Anmeldenummer: 00203164.9
(22) Anmeldetag: 12.09.2000
(51) Int. Cl.: H04B 3/56, H01F 27/28

(54) **Netzwerkkoppler**

(30) Priorität: 14.09.1999 DE 19943895; 14.12.1999 DE 19960470
(71) Anmelder: Philips Corporate Intellectual Property GmbH, 52064 Aachen (DE); Koninklijke Philips Electronics N.V., 5621 BA Eindhoven (NL)
(72) Erfinder: Wendt, Matthias, 52064 Aachen (DE); Budde, Wolfgang, 52064 Aachen (DE); Fuhrmann, Peter, 52064 Aachen (DE)
(74) Vertreter: Volmer, Georg, Dipl.-Ing.

(57) **Zusammenfassung**

Für einen Netzwerkkoppler für Netzwerkteilnehmer in einem Netzwerk mit wenigstens zwei Leitungen ist zur gleichzeitigen Daten- und Energieübertragung vorgesehen, dass der Netzwerkkoppler so ausgebildet ist, dass er sowohl für eine Datenübertragung über die beiden Leitungen (1,2) des Netzwerkes wie auch eine Auskopplung von Energie aus den beiden Leitungen (1,2) des Netzwerkes, auf die ein Pol einer Spannungsquelle gekoppelt ist, vornehmen kann,
dass der Netzwerkkoppler symmetrisch aus beiden Leitungen (1,2) Energie induktiv oder kapazitiv auskoppelt,
dass der Netzwerkkoppler die Daten symmetrisch und differentiell auf die beiden Leitungen (1,2) koppelt und/oder aus diesen auskoppelt
und dass der Netzwerkkoppler die beiden Leitungen (1,2) symmetrisch abschließt.

## Beschreibung

Die Erfindung betrifft einen Netzwerkkoppler für Netzwerkteilnehmer in einem Netzwerk mit wenigstens zwei Leitungen.

Netzwerkkoppler haben generell die Aufgabe, Daten, die über ein Netzwerk übertragen werden, ein- bzw. auszukoppeln. Sie stellen also die Verbindung zwischen einem Netzwerkteilnehmer und dem Netzwerk her. Daten, die von einem Netzwerkteilnehmer geliefert werden, werden mittels des Netzwerkkopplers in das Netzwerk eingekoppelt. Umgekehrt werden auf dem Netzwerk übertragene Daten mittels des Netzwerkkopplers ausgekoppelt und dem Netzwerkteilnehmer zur Verfügung gestellt.

Bekannte Netzwerkkoppler beschränken sich auf das Ein- bzw. Auskoppeln von Daten.

Es ist Aufgabe der Erfindung, einen Netzwerkkoppler zu schaffen, der neben der Datenübertragung auch für eine Energieübertragung geeignet ist.

Diese Aufgabe ist erfindungsgemäß dadurch gelöst, dass der Nerzwerkkoppler so ausgebildet ist, dass er sowohl für eine Datenübertragung über die beiden Leitungen des Netzwerkes wie auch eine Auskopplung von Energie aus den beiden Leitungen des Netzwerkes, auf die ein Pol einer Spannungsquelle gekoppelt ist, vornehmen kann, dass der Netzwerkkoppler symmetrisch aus beiden Leitungen (1,2) Energie ein- und/oder auskoppelt, dass der Netzwerkkoppler die Daten symmetrisch, differentiell und indukktiv oder kapazitiv auf die beiden Leitungen (1,2) koppelt und/oder aus diesen auskoppelt und dass der Netzwerkkoppler die beiden Leitungen symmetrisch abschließt.

Zur Datenübertragung werden die Daten auf den beiden Leitungen des Netzwerks symmetrisch und differentiell übertragen. D.h. beispielsweise ein über die Netzwerkleitungen übertragenes Datenbit wird auf beiden Leitungen jedoch mit entgegengesetzter Polarität übertragen. Der Netzwerkkoppler koppelt diese Daten induktiv oder kapazitiv sowie symmetrisch und differentiell ein bzw. aus.

Der Netzwerkkoppler ist darüber hinaus jedoch auch zur Energieübertragung geeignet. Ein Pol einer Spannungsquelle ist mit beiden Leitungen des Netzwerkes gekoppelt. Der Netzwerkkoppler ist so ausgebildet, dass er diese Energie aus den beiden Leitungen auskoppeln kann. Dies geschieht symmetrisch, d.h. der Strom, den der Netzwerkkoppler aus den Leitungen des Netzwerkes zieht, ist auf beiden Leitungen gleich groß. Dies wird dadurch erreicht, dass die Last, die der Netzwerkkoppler gegenüber den beiden Leitungen des Netzwerks darstellt, auf beiden Leitungen gleich groß ist, dass also die beiden Leitungen symmetrisch abgeschlossen werden.

Damit wird einerseits erreicht, dass sowohl eine Daten- wie auch eine Energieübertragung über den Netzwerkkoppler bzw. die beiden Leitungen des Netzwerks ermöglicht wird. Durch die streng symmetrische Auskopplung von Versorgungsströmen auf den beiden Leitungen und die symmetrische differentielle Üertragung der Daten auf den beiden Leitungen wird erreicht, dass die Datenübertragung durch Störungen auf den beiden Netzwerkleitungen, die beispielsweise durch die Energieverteilung verursacht sein können, nicht gestört wird.

Derartige Netzwerkkoppler sind relativ einfach und damit preiswert aufzubauen.

Ein gemäß einer Ausgestaltung der Erfindung vorgesehener Netzwerkkoppler gemäß Anspruch 2 zeichnet sich durch einen solchen einfachen Aufbau aus, ist jedoch gleichwohl in der Lage die oben genannten Bedingungen zu erfüllen. Die beiden ersten und Zweiten Primärspulen, die gleichen Widerstand bzw. Scheinwiderstand aufweisen, dienen einerseits dazu, Energie aus den beiden Leitungen des Netzwerks auszukoppeln. Dies geschieht in symmetrischer Weise, d.h. Ströme, die infolge der Energieauskopplung fließen, teilen sich in gleiche Ströme auf den beiden Leitungen auf.

Die erste Primärspule und die Zweite Primärspule sind mit einer Sekundärspule magnetisch gekoppelt. In die Sekundärspule wird nur dann eine Spannung induziert, wenn zwischen den beiden ersten Anschlüssen der ersten und der zweiten Primärspule ein Differenzstrom fließt. Ströme gleichen Vorzeichens in beiden Wicklungen führen hingegen nicht zu einer Spannungsinduktion in die Sekundärspule. Damit wird erreicht, dass differentiell aber die beiden Leitungen übertragene Daten zu einer Spannungsinduktion in die Sekundärspule führen, nicht jedoch mit gleichem Vorzeichen stattfindende Störungen, die beispielsweise durch Schwankungen der Versorgungsspannung infolge variierender Last auftreten können.

Um die oben beschriebene symmetrische Auskopplung zu erreichen, sind die beiden Primärspulen vorteilhaft gemäß Anspruch 3 auszugestalten. Im einfachsten Fall kann dies dadurch erreicht werden, dass die Wicklungen aus gleichem Material bestehen und gleichen Querschnitt und gleiche Windungszahl aufweisen, wie dies gemäß Anspruch 4 vorgesehen ist.

Das Windungsverhältnis zwischen der Windungszahl, die die Primärspulen aufweisen und der Windungszahl der Sekundärspule bestimmt das Spannungsverhältnis der Differenzspannung an den Klemmen der Sekundärspule. Es hat sich hier als vorteilhaft erwiesen, wie gemäß einer weiteren Ausgestaltung der Erfindung nach Anspruch 5 vorgesehen ist, dass die Sekundärspule eine höhere Windungszahl als die Primärspulen aufweist.

Die Primärspulen können relativ einfach aufgebaut werden, indem sie beispielsweise wie gemäß weiteren Ausgestaltungen der Erfindung vorgesehen ist, als Metallstreifen ausgebildet sind gegebenenfalls eine Windungszahl von n=1 aufweisen.

Ein weiterer vorteilhafter möglicher Aufbau der Spulen besteht darin, dass sie als eine gedruckte Schaltung auf eine Platine vorgesehen sind, wie dies gemäß Anspruch 8 vorgesehen ist.

Nachfolgend werden einige Ausgestaltungen der Erfindung anhand der Zeichnung näher erläutert. Es zeigen:
Fig. 1 ein Prinzipschaltbild eines erfindungsgemäßen Netzwerkkopplers,
Fig. 2 eine schematische Darstellung des Aufbaus eines Netzwerkkopplers mit zwei Primärspulen und einer Sekundärspule, die magnetisch miteinander gekoppelt sind,
Fig. 3 eine Schemazeichnung eines Netzwerkkopplers entsprechend Fig. 2, bei dem die Windungszahl der Primärspulen zu 1 gewählt wurde,
Fig. 4 eine erste Realisierungsform eines Netzwerkkopplers mir Spulen gemäß Fig. 3 und
Fig.5 eine zweite Realisierungsform eines Netzwerkkopplers mit Spulen gemäß Fig. 3.

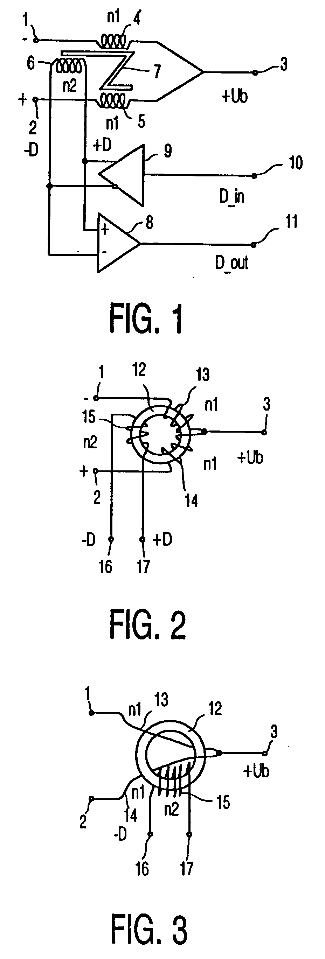

In Fig. 1 ist ein Prinzipschaltbild eines erfindungsgemäßen Nerzwerkkopplers dargestellt.

Der Netzwerkkoppler soll in bzw. aus Leitungen 1 und 2 eines Netzwerkes Daten ein- und auskoppeln sowie einen Pol einer Energieversorgung, die auf beide Leitungen 1 und 2 gekoppelt ist, ebenfalls ein- bzw. auskoppeln. Dazu soll der Netzwerkkoppler an einem Versorgungsspannungsanschlußpunkt 3 einer Energieversorgungsspannung +Ub zur Verfügung stellen, die aus den beiden Leitungen 1 und 2 des Netzwerks ausgekoppelt wird.

Dazu sind zwei Primärspulen 4 und 5 vorgesehen, welche im Idealfall gleich aufgebaut sind, d.h. aus gleichem Material bestehen und gleichen Querschnitt sowie gleiche Windungszahl aufweisen. In jedem Falle müssen die beiden Primärspulen 4 und 5 gleichen Widerstand bzw. Scheinwiderstand aufweisen.

Die jeweils ersten Anschlüsse der beiden Primärspulen 4 und 5 sind jeweils mit einer der Leitungen 1 bzw. 2 des Netzwerkes gekoppelt. Die zweiten Anschlüsse sind auf dem gemeinsamen Versorgungsspannungsanschlußpunkt 3 geführt.

Durch diese spezielle Ausgestaltung des Netzwerkkopplers wird erreicht, dass Versorgungsströme, die in dem Versorgungsspannungsanschlußpunkt 3 fließen, sich auf zwei identisch gleich große Ströme aufteilen, die in den Primärspulen 4 und 5 und damit auch in den beiden Leitungen des Netzwerkes 1 und 2 fließen. Es wird somit eine streng symmetrische Belastung der beiden Leitungen 1 und 2 mit Versorgungsströmen erreicht.

Über die beiden Leitungen 1 und 2 des Netzwerkes werden gegebenenfalls auch Daten übertragen, die symmetrisch und differentiell auf beiden Leitungen übertragen werden.

Um diese Daten auszukoppeln ist in dem Netzwerkkoppler gemäß Fig. 1 eine Sekundärspule 6 vorgesehen, welche mittels einer magnetischen Kopplung 7 mit den beiden Primärspulen 4 und 5 magnetisch gekoppelt ist.

In die Wicklung der Primärspule 6 wird nur dann eine Spannung induziert, wenn in den Primärspulen 4 und 5 Differenzströme auftreten. Dies ist genau dann der Fall, wenn Daten auf den beiden Leitungen 1 und 2 des Netzwerkes symmetrisch differentiell übertragen werden. Es findet dann eine entsprechende Induktion einer Spannung in die Sekundärspule 6 statt.

Entsprechendes gilt umgekehrt für die Einkopplung von Daten, die mittels der Primärspule 2 und der Kopplung 7 und der beiden Primärspulen 4 und 5 auf die beiden Leitungen 1 und 2 des Netzwerkes in differentieller Form eingekoppelt werden können.

Zum Auskoppeln der Daten ist ein erster Anschluß der Sekundärspule 6, der die Daten mit negativer Polarität führt, auf einen invertierenden Eingang eines Verstärkers 8 geführt. Der zweite Anschluß der Sekundärspule 6 ist auf einen zweiten nichtinvertierenden Eingang desselben Verstärkers gekoppelt. Mittels eines derartigen Verstärkers 8 kann somit eine Auswertung der Daten erfolgen. Der Verstärker 8 stellt ausgangsseitig die entsprechenden Daten an einem Anschluß 11 zur Verfügung, der in der Figur mit D_out gekennzeichnet ist.

Zur Einkopplung von Daten mittels des Netzwerkkopplers in die beiden Leitungen 1 und 2 des Netzwerkes ist ein Verstärker 9 vorgesehen, dessen nichtinvertierender Eingang mit dem zweiten Anschluß der Primärspule 6 und dessen invertierender Ausgang mit dem ersten Anschluß der Sekundärspule 6 gekoppelt ist. Dem Verstärker eingangsseitig von einem zweiten Anschlußpunkt 10 zugeführte Daten werden somit mittels des Verstärkers 9 als Signale +D und -D mit verschiedener Polarität zur Verfügung gestellt und über die Primärspule 2 und die magnetische Kopplung 7 auf die Primärspulen 4 und 5 übertragen, so dass entsprechende symmetrische differentielle Spannungssignale auf die Leitungen 1 und 2 des Netzwerkes eingekoppelt werden.

Trotz des relativ einfachen Aufbaus des Netzwerkkopplers gemäß Fig. 1 gestattet dieser somit sowohl eine Übertragung von Daten wie auch eine Energieversorgung. Durch die streng symmetrische Auskopplung von Strömen der Energieversorgung findet keine Störung der Daten statt. Umgekehrt werden die Daten differentiell übertragen, so dass die Versorgungsspannung nicht gestört wird.

Der Nerzwerkkoppler erfüllt somit alle Anforderungen, die zur gleichzeitigen ungestörten Datenübertragung und Energieübertragung über zwei Leitungen eines Netzwerkes zu stellen sind.

Fig. 2 zeigt in einer schematischen Darstellung, wie die beiden Primärspulen 4 und 5, die Sekundärspule 6 und die magnetische Kopplung 7 gemäß Fig. 1 konkret realisiert werden können.

Dazu zeigt Fig. 2 einen Kern 12, der in der Lage ist, einen magnetischen Fluß zu führen.

Es sind zwei Primärspulen 13 und 14 vorgesehen, welche in dem Ausführungsbeispiel gemäß der Figur jeweils drei Wicklungen aufweisen. Um den gleichen Kern 12 ist eine Sekundärspule 15 gewickelt, welche in diesem Ausführungsbeispiel ebenfalls drei Wicklungen aufweist.

Die beiden Anschlüsse der Sekundärspule 15 liefern die positiven bzw. negativen Datensignale +D bzw. -D. Die beiden Primärspulen 13 und 14 sind mit ihren ersten Anschlüssen mit den beiden Leitungen 1 und 2 des Netzwerkes und mit ihren zweiten Anschlüssen gemeinsam auf den Energieversorgungsspannungsanschußpunkt 3 geführt.

Die Fig. 2 zeigt, dass die Anordnung der Wicklungen mit ihrer magnetischen Kopplung gemäß Fig. 1 sehr einfach mittels dreier Wicklungen um einen gemeinsamen magnetisierbaren Kern realisiert werden können.

In der Darstellung gemäß Fig. 2 weisen die beiden Primärspulen 13 und 14 jeweils eine Windungszahl von n1 auf, wohingegen die Sekundärspule eine Wicklungszahl von n2 aufweist. Das Windungsverhältnis zwischen 2·n 1 und n2 bestimmt das Spannungsverhältnis an den beiden Anschlüssen 16 und 17 der Sekundärspule 15, an denen das positive Datensignal +D bzw. das negative Datensignal -D zur Verfügung gestellt werden.

Um dort eine genügend hohe Spannung zu erreichen, hat es sich als vorteilhaft erwiesen, n2 größer als n1 zu wählen.

Da außerdem durch die Wicklungen n1 der beiden Primärspulen 4 und 5 jeweils der halbe Versorgungsstrom fließt, ist es vorteilhaft, diese mit relativ großem Querschnitt auszuführen.

In Fig. 3 ist eine schematische Darstellung entsprechend Fig. 2 angedeutet, bei welcher die beiden Primärspulen 13 und 14 jeweils nur eine Windung n1=1 aufweisen. Die Sekundärspule 15 weist hingegen eine Windungszahl von n2=5 auf.

Durch dieses Windungszahlenverhältnis wird erreicht, dass die Differenzspannung an den Anschlüssen 16 und 17 der Sekundärspule 15 relativ groß ist.

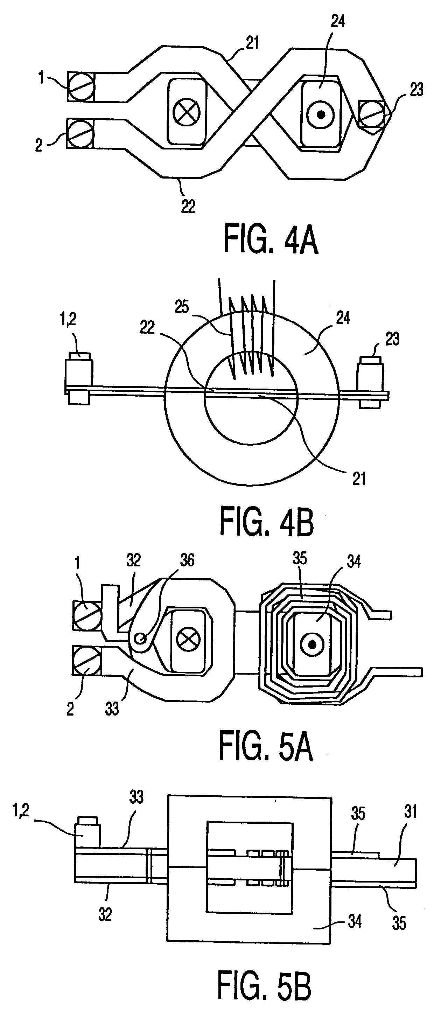

In Fig. 4 ist eine erste konkrete Ausführungsform eines Netzwerkkopplers dargestellt, bei dem das Windungszahlenverhäknis entsprechend der schematischen Darstellung gemäß Fig. 3 gewählt ist.

Es sind zwei Metallstreifen 21 und 22 vorgesehen, welche einen relativ großen Querschnitt aufweisen und auf einen gemeinsamen Versorgungsspannungsanschlußpunkt 23 geführt sind. Die beiden Metallstreifen 21 und 22 laufen, wie die Fig. 4A zeigt, über Kreuz durch einen magnetischen Kern 24 und bilden so jeweils eine Spule mit einer Windung.

Wie die Fig. 4B zeigt, ist um diesen magnetischen Kern 24 eine Sekundärspule 25 gewickelt.

Die Ausführungsform gemäß der Darstellung Fig. 4 hat den Vorteil, dass aufgrund des Windungsverhältnisses n2:n1 der Sekundärspule 25 und der Primärspulen 21 und 22 eine relativ hohe Differenzspannung in die Sekundärspule 25 induziert wird.

Die relativ großen in den Primäspulen 21 und 22 fließenden Versorgungsströme, die gemeinsam auf den Versorgungsspannungsanschlußpunkt 23 geführt sind, werden durch die Metallstreifen 21 und 22 geführt, die diese problemlos aufnehmen können.

Eine derartige Anordnung gemäß Fig. 4 kann vorteilhaft in einem Gehäuse untergebracht sein oder vergossen sein und beispielsweise mit Kunststoff umspritzt sein. Es müssen dann nach außen nur die Anschlußpunkte 1, 2, 23 und die beiden Anschlüsse der Sekundärspule 25 geführt werden.

Die Anschlüsse können durch Aufpressen oder durch Steckverbinder hergestellt werden. Insbesondere auf der Netzwerkseite ist in diesem Falle auf einen möglichst niedrigen Übergangswiderstand zu achten, damit Schwankungen in den Versorgungsströmen die Datenübertragung nicht stören.

Um einen derartigen Netzwerkkoppler in ein elektronisches Gerät zu integrieren, kann es vorteilhaft sein, die zweite Ausführungsform gemäß Fig. 5 zu wählen. Bei dieser Ausführungsform ist eine zweilagige Platine 31 vorgesehen, welche auf ihren beiden Seiten jeweils eine der Primärwicklungen 32 bzw. 33 führt, welche jeweils einmal um einen magnetischen Kern 34 geführt sind, also eine Windungszahl von jeweils n1 = 1 aufweisen. Ebenfalls beiderseitig der Platine ist eine Sekundärspule 35 vorgesehen, welche mehrfach um den magnetischen Kern 34 geführt wird, über den eine magnetische Kopplung zwischen den beiden Primärspulen 32 und 33 einerseits und der Sekundärspule 34 erreicht wird.

Bei einer derartigen Anordnung können somit die drei Spulen gemeinsam auf einer zweilagigen Platine ausgebildet werden, was gegebenenfalls den Aufbau des Netzwerkkopplers weiter vereinfacht.

Auch hier ist wesentlich, dass die Leiterfühung streng symmetrisch ist und dass insbesondere die beiden Primärspulen 32 und 33 eine symmetrische Stromaufteilung des durch den Versorgungsspannungsanschlußpunkt 36 fließenden Stroms gewährleisten. Daher ist der Versorgungsspannungsanschlußpunkt 36 symmetrisch angeordnet und durch eine Durchkontaktierung realisiert.

Es kann gegebenenfalls eine Platine mit mehr als zwei Lagen vorgesehen sein, bei der dieser Versorgungsspannungsanschlußpunkt 36 vorteilhaft auf einer anderen Lage vorgesehen ist als die Primärwicklungen 32 und 33.

Der magnetische Kern 34 kann vorteilhaft aus zwei Teilen bestehen, die von beiden Seiten auf die Platine 31 gesetzt werden. Selbstverständlich können auch andere Kerne verwendet werden, als in Fig. 5 dargestellt.

Die Zeichnung zeigt, dass eine relativ einfache Realierung des erfindungsgemäßen Netzwerkkopplers möglich ist, der sowohl eine Daten- wie auch eine Energieübertragung über zwei Leitungen eines Netzwerkes gestattet, ohne dass eine gegenseitige Störung dieser Übertragungen stattfindet.

## Patentansprüche

1. Netzwerkkoppler für Netzwerkteilnehmer in einem Netzwerk mit wenigstens zwei Leitungen (1,2), dadurch gekennzeichnet,
dass der Netzwerkkoppler so ausgebildet ist, dass er sowohl für eine Datenübertragung über die beiden Leitungen (1,2) des Netzwerkes wie auch eine Auskopplung von Energie aus den beiden Leitungen (1,2) des Netzwerkes, auf die ein Pol einer Spannungsquelle gekoppelt ist, vornehmen kann,
dass der Netzwerkkoppler symmetrisch aus beiden Leitungen (1,2) Energie ein- und/oder auskoppelt,
dass der Netzwerkkoppler die Daten symmetrisch, differentiell und indukktiv oder kapazitiv auf die beiden Leitungen (1,2) koppelt und/oder aus diesen auskoppelt und dass der Netzwerkkoppler die beiden Leitungen (1,2) symmetrisch abschließt.

2. Netzwerkkoppler nach Anspruch 1, dadurch gekennzeichnet,
dass der Netzwerkkoppler eine erste Primärspule (4;13;21;32), deren erster Anschluß mit der ersten Leitung (1) des Netzwerkes gekoppelt ist, und eine zweite Primärspule (5;14;22;33) aufweist, deren erster Anschluß mit der zweiten Leitung (2) des Netzwerkes gekoppelt ist,
dass die beiden zweiten Anschlüsse der ersten (4;13;21;32) und der zweiten (5;14;22;33) Primärspule in einem Versorgungsspannungsanschlußpunkt (3;23;36) miteinander verbunden sind, welcher eine Versorgungsspannung liefert,
dass der Netzwerkkoppler eine Sekundärspule (5;15;25;34,35) aufweist, mittels welcher eine Ein- und/oder Auskopplung von Daten aus den beiden Leitungen (1,2) des Netzwerkes vornehmbar ist
und dass beide Primärspulen (4;13;21;32), (5;14;22;33) und die Sekundärspule (5;15;25;34,35) eines Kerns (7;12;24;34) magnetisch miteinander gekoppelt sind.

3. Netzwerkkoppler nach Anspruch 2, dadurch gekennzeichnet,
dass die beiden Primärspulen (4;13;21;32), (5;14;22;33) so ausgestaltet sind, dass ein durch den Versorgungsspannungsanschlußpunkt (3;23;36) fließender Strom in zwei gleich große in die beiden Leitungen (1,2) des Netzwerkes fließende Ströme aufgeteilt wird.

4. Netzwerkkoppler nach Anspruch 3, dadurch gekennzeichnet,
dass die beiden Primärspulen (4;13;21;32), (5;14;22;33) aus dem gleichen Material bestehen und gleichen Querschnitt, gleiche Länge und gleiche Windungszahl aufweisen.

5. Netzwerkkoppler nach Anspruch 1, dadurch gekennzeichnet,
dass das die Sekundärspule (5;15;25;34,35) eine höhere Windungszahl aufweist als die Primärspule (4;13;21;32), (5;14;22;33).

6. Netzwerkkoppler nach Anspruch 1, dadurch gekennzeichnet,
dass die Primärspulen (4;13;21;32), (5;14;22;33) eine Windungszahl n=1 aufweisen.

7. Netzwerkkoppler nach Anspruch 1, dadurch gekennzeichnet,
dass die Primärspulen als Metallstreifen (21,22) ausgebildet sind, welche vorzugsweise kreuzweise durch den Kern (24) geführt sind.

8. Netzwerkkoppler nach Anspruch 1, dadurch gekennzeichnet,
dass eine gedruckte Schaltung mit einer zweilagigen Platine (31) vorgesehen ist, auf welcher sowohl die beiden Primärspulen (32,33) wie auch die Sekundärspule (34,35) als Leiterbahnen aufgedruckt sind.

9. Netzwerkteilnehmer mit einem Netzwerkkoppler nach einem der Ansprüche 1 bis dadurch gekennzeichnet,
dass die Daten, die der Netzwerkteilnehmer in das Netzwerk übertragen oder aus diesem empfängt, mittels des Netzwerkkopplers in die beiden Leitungen (1,2) des Netzwerks eingekoppelt werden bzw. aus diesen ausgekoppelt werden und dass die Energieversorgung des Netzwerkteilnehmers mittels der Energie sichergestellt wird, die der Netzwerkkoppler aus den beiden Leitungen (1,2) des Netzwerkes auskoppelt und an dem Versorgungsspannungsanschlußpunkt (3;23;36) zur Verfügung stellt.

10. Netzwerkteilnehmer nach Anspruch 9, dadurch gekennzeichnet,
dass es sich bei dem Netzwerkteilnehmer um einen Sensor, Aktuator oder ein Steuergerät eines Fahrzeugs handelt.
